# EUROPÄISCHE PATENTSCHRIFT

(11) **EP 0 485 688 B1**
(45) Veröffentlichungstag und Bekanntmachung des Hinweises auf die Patenterteilung: **16.08.1995**
(21) Anmeldenummer: 91107552.1
(22) Anmeldetag: 09.05.1991
(51) Int. Cl.: F16K 24/00, F16K 51/00

(54) **Be- und Entlüftungsventil**
Aerating and venting valve
Soupape d'aération et de purge

(30) Priorität: 16.11.1990 DE 4036651
(43) Veröffentlichungstag der Anmeldung: 20.05.1992
(73) Patentinhaber: Johannes Erhard, H. Waldenmaier Erben Süddeutsche Armaturenfabrik GmbH & Co., D-89522 Heidenheim (DE)
(72) Erfinder: Altenbrandt, Erhard, W-8889 Syrgenstein (DE); Brien, Joachim, W-7926 Treffelhausen (DE)

(56) Entgegenhaltungen:
- DE-A- 1 550 229
- DE-B- 2 124 245
- DE-B- 2 235 161
- DE-C- 645 808
- US-A- 3 120 240
- US-A- 4 299 248

## Beschreibung

Die Erfindung betrifft Be- und Entlüftungsventile mit einer kleinen Entlüftungsöffnung für den Entlüftungsvorgang.

Bei diesen z.B. aus DE-A-1 550 229 bekannten Ventilen wird die kleine Lüftungsöffnung dann, wenn der Pegel in dem zu entlüftenden Raum ansteigt, von einem Abschlußkörper, der von einem Schwimmer getragen wird geschlossen. Wenn der Schwimmer sich mit sinkendem Pegelstand senkt, entfernt sich auch der Abschlußkörper von der Lüftungsbohrung und gibt diese frei. Die Ventile stehen hierbei unter vollem Betriebsdruck der Leitung.

An den Seitenwänden der Lüftungsöffnung können sich jedoch Ablagerungen bilden, was sehr kritisch werden kann, weil die Lüftungsöffnung im allgemeinen einen sehr kleinen Durchmesser hat. Diese Ablagerungen können somit leicht die Lüftungsöffnung verstopfen und dadurch das Ventil außer Funktion setzen.

Die Fachwelt sucht seit Jahren nach einer Möglichkeit, die übliche kleine Bohrung für die Betriebsentlüftung der Be- und Entlüftungsventile automatisch reinigen zu lassen, bisher jedoch ohne Erfolg.

Aus der DE-B-2 124 245 ist ein Be- und Entlüftungsventil bekannt, in dessen Einlaßöffnung, über deren gesamter Länge, eine Reinigungsnadel bewegbar angeordnet ist. Diese Reinigungsnadel befindet sich ständig in der Einlaßöffnung, und deshalb muß ihr Außendurchmesser erheblich kleiner als der Durchmesser der Einlaßöffnung sein, damit letztere als Einlaßöffnung funktionieren kann.

Aufgabe der vorliegenden Erfindung ist es, Be- und Entlüftungsventile zu schaffen, die diesen Nachteil nicht aufweisen und auch nach jahrelangem wartungsfreiem Gebrauch nicht verstopfen.

Diese Aufgabe ist gemäß der Erfindung dadurch gelöst, daß die Lüftungsöffnung an ihrem dem Abschlußkörper zugewandten Endabschnitt in Form eines Zylinders mit relativ kleinem Durchmesser gebildet ist, und eine Nadel, deren Durchmesser etwa gleich dem Durchmesser der genannten zylindrischen Lüftungsöffung ist, relativ zu dieser bewegbar so angeordnet ist, daß sie beim Übergang des Lüftungsventils in die Zu-Stellung in diese Lüftungsöffnung eindringt und sie dabei reinigt.

Dank der vorliegenden Erfindung wird das Be- und Entlüftungsventil somit zwangsläufig gereinigt. Je öfter das Ventil schaltet, desto häufiger wird es auch gereinigt. Dieses Ventil arbeitet deshalb auch nach langjähriger Benutzung stets einwandfrei. Die sonst übliche Verstopfungsgefahr der kleinen Entlüftungsbohrung ist gemäß der Erfindung vollständig eliminiert.

Nach einer Ausführungsform der Erfindung ist die Nadel durch eine Feder in Zu-Stellung vorgespannt.

Vorteilhafterweise ist eine Druckfeder zwischen der inneren Oberfläche der Kappe des Ventils und dem oberen Endbereich der Nadel, diese in Zu-Stellung vorspannend, angeordnet.

Die Vorspannung der Druckfeder ist zweckmäßigerweise so ausgelegt, daß sie bei Überdruck komprimiert und die Nadel aus der Lüftungsöffnung herausgedrückt wird. Diese Feineinstellung ermöglich das Schalten des Ventils bei gewünschtem Druck.

Nach einer Weiterbildung der Erfindung geht die Lüftungsöffnung an ihrem äußeren Ende in einen Zylinderraum über, dessen Durchmesser etwa gleich dem Bund der Nadel ist. Damit erhält man den Vorteil, daß der Bund der Reinigungsnadel bei deren Bewegung an der Seitenwand des zylindrischen Raums geführt wird. Durch eine Führung der Nadel kann somit in denkbar einfacher Weise ein Verkanten oder Verklemmen derselben ausgeschlossen werde.

Der Nadelbund kann seinerseits Lüftungsöffnungen aufweisen. Nach dieser Weiterbildung kann der Nadelbund den Querschnitt des zylindrischen Raums voll ausfüllen, so daß eine besonders gute seitliche Führung des Bundes und damit der Nadel bei ihrer Bewegung erzielt wird.

Zweckmäßigerweise enthält der Abschlußkörper im Anlagebereich eine Dichtung. Diese kann eine in ihrer Form zur Nadel komplementäre Ausnehmung aufweisen. Diese Ausführungsform ermöglicht es, daß das untere Ende der Reinigungsnadel bei der Bewgung in die Zu-Stellung nicht nur teilweise in die Lüftungsöffnung hinein, sondern vollständig durch diese hindurchgeschoben wird. An den Seitenwänder der Lüftungsöffnung abgelagerte Teilchen werden abgestreift und vollständig aus der Lüftungsöffnung entfernt.

Vorteilhafterweise ist die die Lüftungsöffnung seitlich umgebende Wand in einem radialen Abstand von dem Rand der Lüftungsöffnung von der zugewandten Oberfläche des Abschlußkörpers fort fliehend oder sprungartig zurückgesetzt ausgebildet. Dadurch wird bei gleicher Andruckkraft ein hoher Pressdruck an der Dichtung und damit eine sichere Abdichtung der Lüftungsöffnung erreicht.

Nach einer anderen bevorzugten Ausführungsform der Erfindung ist eine Buchse mit einer Lüftungsöffnung in einem Gehäuse in dessen Längsachse bewegbar angeordnet, wobei die Buchse stets um eine Mindestlänge durch das Gehäuses, seitlich gegen dieses abgedichtet, nach unten vorsteht.

Bei dieser Ausführungsform der Erfindung übt die Druckfeder stets eine Kraft auf die Dichtung des Abschlußkörpers aus.

Zweckmäßigerweise weist dabei die Buchse an ihrem oberen, innerhalb des Gehäuses angeordneten Ende nach außen einen vorstehenden Flansch auf, an welchen die Druckfeder anliegt und diese von der Lüftungsöffnung fort vorspannt.

Das Kopfstück der Reinigungsnadel dient zur Anlage des nach außen zeigenden Endes der Druckfeder und ist mit Lüftungsbohrungen versehen.

Die Erfindung ist im folgenden anhand eines Ausführungsbeispiels und in Verbindung mit den Zeichnungen näher beschrieben:
- Fig. 1A: Ein erfindungsgemäßes Be- und Entlüftungsventil in geöffneter Stellung,
- Fig. 1B: das Ventil der Figur 1 in geschlossener Stellung,
- Fig. 2A: eine andere Ausführungsform eines erfindungsgemäßen Be- und Entluftungsventil,
- Fig. 2B: das in Figur 2A gezeigte Ventil in Zu-Stellung.

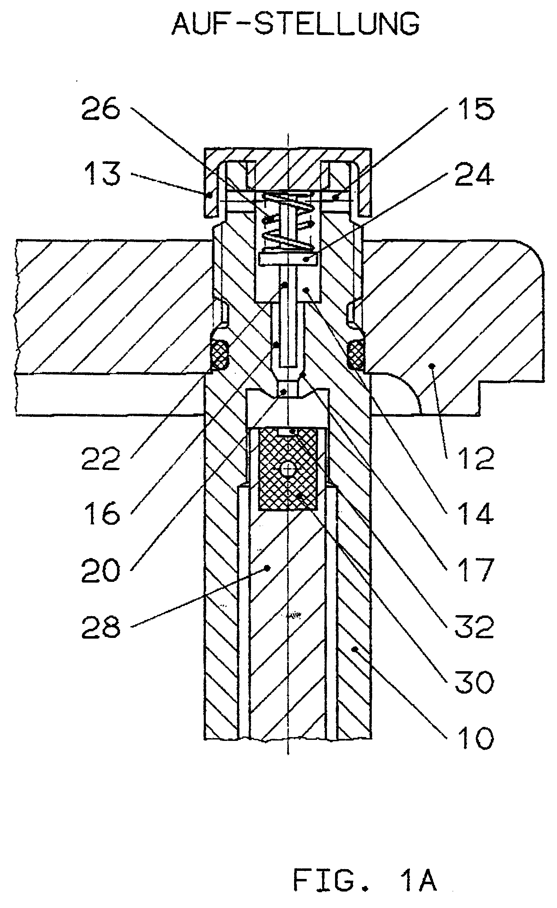

Die Figur 1A zeigt ein erfindungsgemäßes Be- und Entlüftungsventil in AUF-Stellung. In dieser Figur sieht man eine Gewindehülse 10, die in einem Gehäusedeckel 12 eingeschraubt ist. Die Gewindehülse 10 ihrerseits weist einen Raum 14 auf, der durch eine Kappe 13 abgeschlossen ist.

Der Raum 14, der eine zylindrische Form hat, geht nach unten in einen ebenfalls zylindrischen Raum 16 über, der seinerseits trichterartig über die Schrägwände 17 in eine Lüftungsöffnung 20 übergeht. In dem Raum 14, 16 der Hülse 10 ist ferner eine Reinigungsnadel 22 angeordnet, die etwa in ihrem mittleren Bereich einen Bund 24 aufweist. Über dem oberen Abschnitt der Reinigungsnadel 22 ist eine Druckfeder 26 angeordnet, die zwischen der Unterseite der Kappe 13 und der Oberseite des Bundes 24 eingespannt ist. Diese Druckfeder 26 ist so gespannt, daß sie die Nadel 22 nach unten zu drängen versucht. Die Kompression dieser Druckfeder 26 ist so eingestellt, daß die Federkraft bei Überdruck in dem zu entlüftenden Raum überwunden wird, so daß durch den Luftdruck die Nadel 22 angehoben und aus der Lüftungsöffnung 20 herausgezogen wird, so daß sie sich vollständig in der Kammer 14, 16 befindet.

In der unteren Hälfte der Figur 1A sieht man einen Ventilstößel 28, der in seinem oberen Abschnitt einen Dichtungskörper 30 enthält. Der Durchmesser dieses Ventilstößels 28 ist so bemessen, daß er allseitig noch einen Abstand zu der ihm zugewandten Innenwand der Hülse 10 aufweist. Durch diesen Spalt kann Luft an dem Ventilstößel 28 vorbei durch die Lüftungsöffnung 20 in die Kammer 14, 16 und von dort durch die Öffnungen 15 nach außen treten.

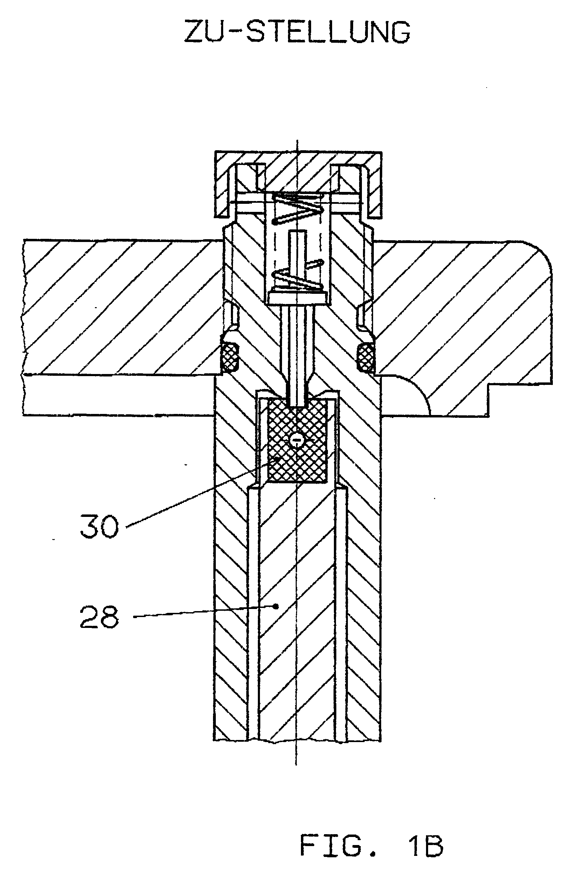

Die Figur 1B zeigt das in Figur 1A dargestellte Be- und Entlüftungsventil in Zu-Stellung. In dieser Stellung ist der Ventilstößel 28 ganz nach oben gefahren, so daß die Oberseite des Dichtkörpers 30 an der die Lüftungsöffnung 20 begrenzenden Wand anliegt. In dieser Stellung ist das Ventil geschlossen. Es kann keine Luft mehr seitlich an dem Dichtkörper 30 vorbei in die Lüftungsöffnung eintreten. Da jetzt kein Druck mehr von unten auf den Bund 24 der Reinigungsnadel 22 ausgeübt wird, wird diese von der Druckfeder 26 nach unten gedrückt. Dabei kommt das untere Ende der Reinigungsnadel 24 in der komplementär ausgebildeten Öffnung 32 des Dichtkörpers 30 zu liegen.

Da der Außendurchmesser der Nadel 22 angenähert so groß ist wie der Innendurchmesser der Lüftungsöffnung 20, reibt die Nadel bei der Bewegung in die Schließstellung an der Umfangswand der Enlüftungsöffnung 20 entlang und schabt Verunreinigungen, die sich dort angesammelt haben, ab. Diese Reinigungswirkung ist auch deshalb besonders gründlich, weil, aufgrund der Ausnehmung 32 in der zugewandten Seite des Dichtkörpers 30, das untere Ende der Nadel 22 vollständig durch die Lüftungsöffnung 20 hindurchgeführt werden kann und abgestreifte Teilchen vollständig aus dieser Lüftungsöffnung 20 herausschiebt, nämlich in die Ausnehmung 32.

Bei Umschaltung in die AUF-Stellung wird die Nadel wieder nach oben gedrückt, insbesondere durch den Überdruck aus dem zu entlüftenden Raum. Das Ventil befindet sich dann wieder in der AUF-Stellung, wie in Figur 1A gezeigt ist. In dieser Stellung ist sowohl eine Be- als auch eine Entlüftung möglich.

Die in den Figuren dargestellten Reinigungsöffnungen sind in das System der Betriebsentlüftung eingebaut. Es wird hier mit sehr kleinen Querschnitten gearbeitet, da während dem Betrieb an dieser Stelle immer hohe Betriebsdrücke verfügbar sind. Bei Luftanfall während des Betriebes, unter vollem Betriebsdruck, fällt die Schwimmerkugel nach unten und es wird die Bohrung 20 freigegeben. Durch den relativ großen Betriebsdruck wird die Reinigungsnadel angehoben, wobei die Druckdifferenz zwischen innen und außen erhalten bleibt. Ist der Entlüftungsvorgang abgeschlossen, wird die Schwimmerkugel wieder angehoben und der Dichtsitz 32 verschließt die Bohrung 20 wieder.

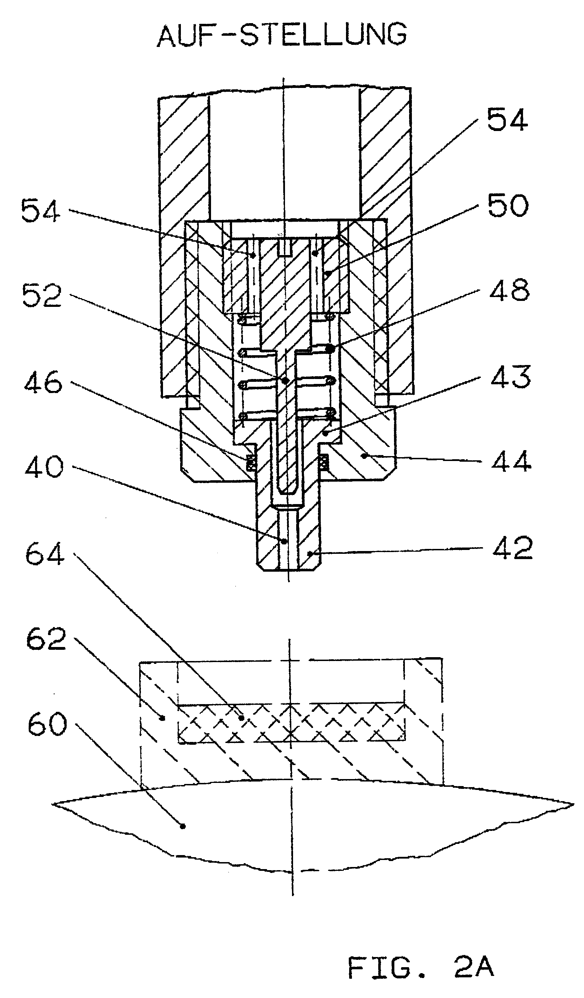

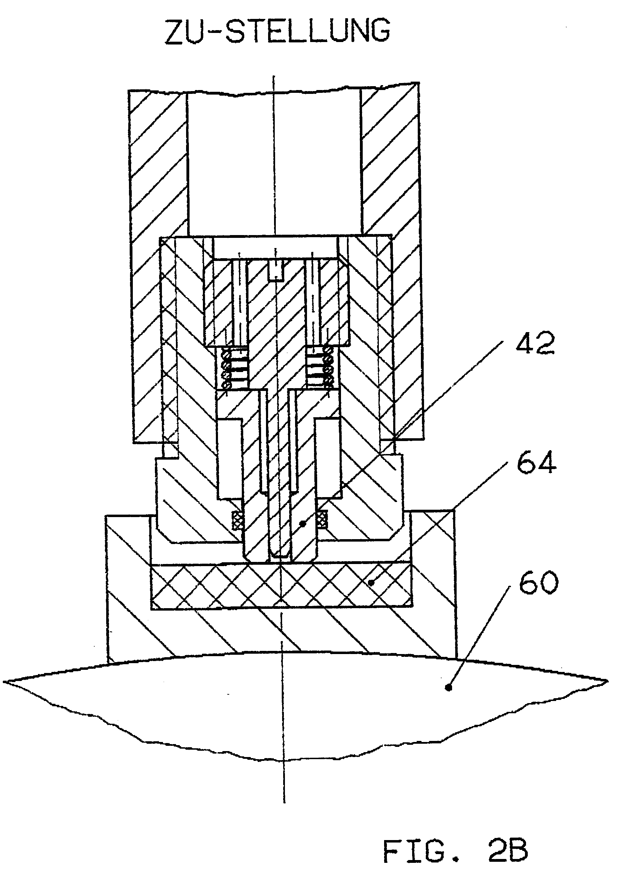

Da es sich nur um eine Betriebsentlüftung handelt, steht der Betriebsdruck auch beim Absinken des Schwimmers an. Die Belüftung der Leitung - bei auftretenden Unterdrücken - erfolgt über eine zweite, relativ große Öffnung dieser Be- und Entlüftungsventile, welche in den Figuren nicht dargestellt sind. Die Figuren 2A und 2B zeigen eine andere erfindungsgemäße Ausführungsform eines Be- und Entlüftungsventils. In diesen Figuren ist auch jeweils der Schwimmer dargestellt, der eine Flachdichtung trägt.

In Figur 2A sieht man eine Buchse 42, die beweglich in einem Gehäuse 44 angeordnet und durch eine Dichtung 46 gegenüber diesem Gehäuse abgedichtet ist. Die Buchse 42 weist an ihrer Unterseite die Lüftungsöffnung 40 auf.

Die Buchse 42 geht an ihrem oberen Ende in einen breiten Flansch 43 über, an dessen Oberseite eine Druckfeder 48 mit ihrem unteren Ende anliegt. Das obere Ende der Druckfeder 48 liegt an Schulterabschnitten 50 einer Reinigungsnadel 52 an. In der umlaufenden Schulter 50 sind Enlüftungsöffnungen 54 ausgebildet.

Die Schulterabschnitte 50 der Reinigungsnadel sind starr mit einem Gehäuse 44 verbunden.

In ihrer Normalstellung drückt die Druckfeder 48 die Buchse 42 nach unten, so daß das untere Ende der Nadel 52 sich oberhalb des oberen Endes der Lüftungsöffnung 40 befindet.

Im unteren Teil der Figur 2A sieht man einen Schwimmer 60, der oben einen Topf 62 trägt, in dessen Öffnung sich eine Dichtung 64 befindet.

Die Figur 2B zeigt dasselbe Be- und Entlüftungsventil in geschlossener Stellung. Wenn der Schwimmer 60 von der Flüssigkeit 60 angehoben wird, kommt die Dichtung 64 mit dem ringförmigen unteren Endabschnitt der Buchse 42 zur Anlage. Steigt der Pegel in dem Raum, der be- bzw. entlüftet werden soll, weiter an, so hebt die Dichtung 64 die Buchse 42 weiter nach oben an und drängt sie gegen den Druck der Druckfeder 48 nach oben. Dabei wird die Lüftungsöffnung 40 bzw. die sie umgebende Buchse 42 über die Reinigungsnadel 52 gestülpt oder geschoben.

Auch in diesem Ausführungsbeipsiel ist der äußere Durchmesser der Nadel 52 wieder etwa gleich groß wie der innere Durchmesser der Lüftungsöffnung 40. Wenn sich die Reinigungsnadel 52 relativ zu der Buchse 42 bewegt und in die Lüftungsöffnung 40 hineingleitet, kommt sie mit dessen Außenwand in Kontakt. Dabei reibt sie an der Außenwand der Entlüftung angelagerte Teilchen ab und schiebt sie aus der Lüftungsöffnung 40 nach unten heraus.

Auch diese Ausführungsform der Erfindung kann so ausgestaltet werden, daß in der Zu-Stellung die Nadel 52 nach unten über den unteren Rand der Lüftungsöffnung 40 hinaus vorsteht. Auch bei dieser Ausführungsform kann wiederum das Dichtmaterial 64 eine Ausnehmung aufweisen, die komplementär zu der Form der Unterseite der Buchse 42 oder komplementär zur Unterseite der Reinigungsnadel 52 ausgebildet ist. Auf diese Weise kann beim Schalten in die vollständige Zu-Stellung die Reinigungsnadel 52 in ihrem unteren Ende vollständig durch die gesamte Lüftungsöffnung 40 hindurchbewegt werden, so daß die gesamte Lüftungsöffnung gereinigt wird.

Wenn der Pegel wieder abfällt und der Schwimmer 60 wieder nach unten sinkt, bewirkt die Kraft der Druckfeder 48, daß die Buchse 42 ebenfalls nach unten abgesenkt wird, und zwar so weit, bis der untere Rand ihrer Schulter 43 mit dem Gehäuse 44 zum Anschlag kommt, wie es in Figur 2A dargestellt ist. Bei dieser Bewegung wird die Reinigungsnadel 52 wieder vollständig aus der Lüftungsöffnung entfernt, wie es Figur 2A dargestellt ist.

## Patentansprüche

1. Be- und Entlüftungsventil, dessen von einem Abschlußkörper verschließbare Lüftungsöffnung (20, 40) an ihrem dem Abschlußkörper zugewandten Endabschnitt (42, 52) als Zylinderbohrung mit relativ kleinem Durchmesser ausgebildet ist, in die eine Reinigungsnadel eintaucht,
dadurch gekennzeichnet, daß der Durchmesser der Nadel etwa gleich dem Durchmesser der Zylinderbohrung ist und die Nadel relativ zu dieser bewegbar so angeordnet ist, daß die Nadel in Offen-Stellung die Lüftungsöffnung vollständig freigibt und beim Übergang des Lüftungsventils in die Schließstellung in diese Lüftungsöffnung (20, 40) eindringt und sie dabei reinigt.

2. Be- und Entlüftungsventil nach Anspruch 1, dadurch gekennzeichnet, daß die Nadel (22) durch eine Feder (26) in Zu-Stellung vorgespannt ist.

3. Be- und Entlüftungsventil nach einem der vorhergehenden Ansprüche, dadurch gekennzeichnet, daß eine Druckfeder (26) zwischen der inneren Oberfläche der Kappe (13) des Ventils und dem oberen Endbereich der Nadel, diese in Zu-Stellung vorspannend, angeordnet ist.

4. Be- und Entlüftungsventil nach einem der vorhergehenden Ansprüche, dadurch gekennzeichnet, daß die Vorspannung der Druckfeder (26) so ausgelegt ist, daß sie bei Überdruck komprimiert wird und die Nadel (22, 52) aus der Lüftungsöffnung (20) herausgedrückt wird.

5. Be- und Entlüftungsventil nach einem der vorhergehenden Ansprüche, dadurch gekennzeichnet, daß die Lüftungsöffnung (20) an ihrem äußeren Ende in einen Zylinderraum (14) übergeht, dessen Durchmesser etwa gleich dem Bund der Nadel (22) ist.

6. Be- und Entlüftungsventil nach einem der vorhergehenden Ansprüche, dadurch gekennzeichnet, daß der Nadelbund (24) Lüftungsöffnungen aufweist.

7. Be- und Entlüftungsventil nach einem der vorhergehenden Ansprüche, dadurch gekennzeichnet, daß der Abschlußkörper im Anlagebereich eine Dichtung (30) enthält.

8. Be- und Entlüftungsventil nach einem der vorhergehenden Ansprüche, dadurch gekennzeichnet, daß der Abschlußkörper und/oder die Dichtung (30, 64) eine in ihrer Form zur Nadel (22, 52) komplementäre Ausnehmung aufweist.

9. Be- und Entlüftungsventil nach einem der vorhergehenden Ansprüche, dadurch gekennzeichnet, daß die die Lüftungsöffnung (40) seitlich umgebende Wand in einem radialen Abstand von dem Rand der Lüftungsöffnung (40) von der zugewandten Oberfläche des Abschlußkörpers fort fliehend oder sprungartig zurückgesetzt ausgebildet ist.

10. Be- und Entlüftungsventil nach Anspruch 1 oder 2, dadurch gekennzeichnet, daß eine Buchse (42) mit einer Lüftungsöffnung (40) in einem Gehäuse (44) in dessen Längsachse bewegbar angeordnet ist, wobei die Buchse (42) stets um eine Mindestlänge durch das Gehäuses, seitlich gegen dieses abgedichtet, nach unten vorsteht.

11. Be- und Entlüftungsventil nach Anspruch 8, dadurch gekennzeichnet, daß die Buchse (42) an ihrem oberen, innerhalb des Gehäuses angeordneten Ende nach außen vorstehende Flanschen (43) aufweist, an welchen die Druckfeder (48) anliegt und diese von der Lüftungsöffnung (20, 40) fort vorspannt.

12. Be- und Entlüftungsventil nach einem der vorhergehenden Ansprüche, dadurch gekennzeichnet, daß das Kopfstück der Nadel (52) Lüftungsöffnungen (54) aufweist.

## Claims

1. Aerating and venting valve whose air relase orifice (20, 40) - which can be closed by means of an obturator - is, at its end (42, 52) facing the obturator, constituted as a cylinder bore with relatively small diameter, with the cleaning needle immerging into the bore,
characterized in that the diameter of the needle is identical with the diameter of the cylinder bore and the needle movable in relation to the bore is arranged in such a way that the needle in open position completely opens the air release orifice and penetrates into this orifice (20, 40) cleaning it, when the air valve moves into closed position.

2. Aerating and venting valve to claim 1, characterised in that the needle (22) is pre-stressed by a spring (26) in closed position.

3. Aerating and venting valve according to any one of the preceding claims, characterized in that a pressure spring (26) is arranged between the inner surface of the cap (13) of the valve and the upper end section of the needle which is thus pre-stressed in closed position.

4. Aerating and venting valve according to any one of the preceding claims, characterized in that the pre-stress of the pressure spring (26) is designed in such a way that it is compressed under excess pressure and the needle (22, 52) is pushed out of the air release orifice (20).

5. Aerating and venting valve according to any one of the preceding claims, characterized in that the air release orifice (20) at its extreme end is changed into a cylindrical space (14), the diameter of which is nearly identical with that of the collar of the needle (22).

6. Aerating and venting valve according to any one of the preceding claims, characterized in that the collar of the needle (24) has air release orifices.

7. Aerating and venting valve according to any one of the preceding claims, characterized in that the obturator includes a seal (30) in the contact zone.

8. Aerating and venting valve according to any one of the preceding claims, characterized in that the obturator and/or the seal (30, 64) has a recess of a shape complementary to the needle (22, 52).

9. Aerating and venting valve according to any one of the preceding claims, characterized in that the wall laterally surrounding the air release orifice (40), at a radial distance from the rim of the air release orifice (40) is recessed - continuously or abruptly - facing the surface of the obturator.

10. Aerating and venting valve according to claim 1 or 2, characterized in that a bush (42) with an air release orifice (40) is arranged in the housing (44), mobile in the longitudinal axis of the housing with the bush (42) passing through the housing and protruding downwards off the housing by a minimum length and being laterally sealed towards the housing.

11. Aerating and venting valve according to claim 8, characterized in that the bush (42) at its upper end arranged within the housing is equipped with flanges protruding to the outside (43), serving as contact surface to the pressure spring (48) and pre-stressing the pressure spring off the air release orifice (20, 40).

12. Aerating and venting valve according to any one of the preceding claims, characterized in that the head of the needle (52) has air release orifices (54).

## Revendications

1. Soupape d'aération et de purge dont l'orifice de purge d'air (20, 40) - qui peut être fermé par un obturateur - est, à son extremité (42, 52) en face de l'obturateur, constitué d'un trou cylindrique avec un diamètre relativement petit, l'aiguille de nettoyage immergeant dans le trou,
charactérisée en ce que le diamètre de l'aiguille est identique avec le diamètre du trou cylindrique et l'aiguille mobile par rapport au trou est disposée de manière que l'aiguille en position ouverte ouvre entièrement l'orifice de purge d'air et pénètre dans cet orifice (20, 40) en le nettoyant, quand la soupape d'aération et de purge est déplacée vers la position fermée.

2. Soupape d'aération et de purge selon revendication 1, caractérisée en ce que l'aiguille (22) est pré-contrainte par un ressort (26) en position fermée.

3. Soupape d'aération et de purge selon une des revendications précédentes, caractérisée en ce qu'un ressort de pression (26) est disposé entre la surface intérieure du chapeau (13) de la soupape et l'extrémité supérieure de l'aiguille qui est ainsi pré-contrainte en position fermée.

4. Soupape d'aération et de purge selon une des revendications précédentes, caractérisée en ce que la pré-contrainte du ressort de pression (26) est conçue de manière qu'il soit comprimé sous pression excessive et l'aiguille (22, 52) soit poussée hors de l'orifice de purge d'air (20).

5. Soupape d'aération et de purge selon une des revendications précédentes, caractérisée en ce que l'orifice de purge d'air (20) à son extrémité est converti en espace cylindrique (14) dont le diamètre est presque identique avec celui de la collerette de l'aiguille (22).

6. Soupape d'aération et de purge selon une des revendications précédentes, caractérisée en ce que la collerette de l'aiguille (24) est munie d'orifices de purge d'air.

7. Soupape d'aération et de purge selon une des revendications précédentes, caractérisée en ce que l'obturateur comprend un joint (30) dans la zone de contact.

8. Soupape d'aération et de purge selon une des revendications précédentes, caractérisée en ce que l'obturateur et/ou le joint (30, 64) a un évidement d'une forme complémentaire à l'aiguille (22, 52).

9. Soupape d'aération et de purge selon une des revendications précédentes, caractérisée en ce que la paroi entourant latéralement l'orifice de purge d'air (40), a un évidement - continu ou brusque - à une distance radiale du bord de l'orifice de purge d'air (40), en face de la surface de l'obturateur.

10. Soupape d'aération et de purge selon revendication 1 ou 2, caractérisée en ce qu'une douille (42) avec un orifice de purge d'air (40) est disposée dans un boîtier (44), mobile le long de l'axe longitudinal du boitier, la douille (42) passant par le boîtier et faisant saillie hors du boîtier vers le bas par une distance minimum et étant latéralement étanche vers le boîtier.

11. Soupape d'aération et de purge selon revendication 8, caractérisée en ce que la douille (42) à son extrémité supérieure disposée dans le boîtier est munie de brides qui font saillie vers l'extérieur (43), servent de surface de contact au ressort de pression (48) et pré-contraignent le ressort de pression hors de l'orifice de purge d'air (20, 40).

12. Soupape d'aération et de purge selon une des revendications précédentes, caractérisée en ce que la tête de l'aiguille (52) est munie d'orifices de purge d'air (54).
